# EUROPÄISCHE PATENTANMELDUNG

(11) **EP 3 438 042 A1**
(43) Veröffentlichungstag der Anmeldung: **06.02.2019**
(21) Anmeldenummer: 17400047.1
(22) Anmeldetag: 03.08.2017
(51) Int. Cl.: C01B 3/36

(54) **RUSSABTRENNUNG BEI DER SYNTHESEGASERZEUGUNG**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Walter, Stefan, 64347 Griesheim (DE)
(74) Vertreter: Dropsch, Holger

(57) **Zusammenfassung**

Es wird ein Verfahren und eine Anlage zur Herstellung eines Wasserstoff und Kohlenoxide umfassenden Synthesegases durch partielle Oxidation von kohlenstoffhaltigem Brennstoff in Gegenwart eines sauerstoffhaltigen Oxidationsmittels und eines Moderators vorgeschlagen, wobei das erhaltene Rohsynthesegas mit Rußpartikeln beladen ist. Erfindungsgemäß erfolgt das Abkühlen des Rohsynthesegases dergestalt, dass es zunächst nur auf eine Temperatur oberhalb des Taupunkten abgekühlt wird, so dass die Rußpartikel in trockener Form durch Filtration aus dem Rohsynthesegas abgeschieden werden können. Erst nachfolgend erfolgt weiteres Abkühlen auf die für die nachfolgenden Konditionierungs- bzw. Verarbeitungsschritte benötigte Temperatur.

## Beschreibung

### Gebiet der Erfindung

Die Erfindung betrifft ein Verfahren zur Herstellung eines Wasserstoff und Kohlenoxide umfassenden Synthesegases durch partielle Oxidation kohlenstoffhaltiger Brennstoffe, insbesondere flüssiger Brennstoffe wie Öl, Schweröl oder flüssiger Raffinerierückstände auf Kohlenwasserstoffbasis, in Gegenwart eines sauerstoffhaltigen Oxidationsmittels und eines Moderators, enthaltend Wasserdampf und/oder Kohlendioxid, wobei das erhaltene Rohsynthesegas einen signifikanten Anteil an Ruß in Form feiner Partikel aufweist.

Die Erfindung betrifft ferner eine Anlage zur Durchführung des erfindungsgemäßen Verfahrens.

### Stand der Technik

Als Synthesegase bezeichnet man Wasserstoff und Kohlenoxide enthaltende Gasgemische, die in verschiedenen Synthesereaktionen Verwendung finden. Beispiele hierfür sind die Methanolsynthese, die Herstellung von Ammoniak nach dem Haber-Bosch-Verfahren, oder die Fischer-Tropsch-Synthese.

Ein gängiges Verfahren zur Herstellung von Synthesegasen ist die autotherme Flugstromvergasung von gasförmigen, flüssigen oder festen Brennstoffen, wie sie beispielsweise in der DE 10 2006 059 149 B4 beschrieben ist. Am Kopf eines Reaktors sind zentral ein Zünd- und Pilotbrenner sowie rotationssymmetrisch zur Reaktorachse drei Vergasungsbrenner angeordnet. Über die Vergasungsbrenner wird einem Vergasungsraum des Reaktors der Brennstoff mit Sauerstoff und Dampf als Vergasungsmittel zugeführt, in dem der Brennstoff zu Synthesegas umgesetzt wird. Das heiße Vergasungsgas verlässt gemeinsam mit der flüssigen Schlacke den Vergasungsraum und gelangt in einen Quenchraum, in den zur Kühlung von Rohgas und Schlacke Wasser eingedüst wird. Die Schlacke lagert sich im Wasserbad ab und wird über einen Schlackeaustrag abgeführt. Das gequenchte Rohgas wird wasserdampfgesättigt aus dem Quenchraum abgezogen und in nachfolgenden Reinigungsstufen gereinigt. Da der Brennstoff direkt mit dem Oxidationsmittel umgesetzt wird, müssen Oxidationsmittel und Brennstoff koaxial oder koannular zugeführt werden.

Je nach den verwendeten Einsatzstoffen und den Vergasungsbedingungen wird bei der Vergasung ferner Ruß in Form von Rußpartikel erzeugt. Diese lagern sich ebenfalls in dem Wasserbad ab.

Spezielle Technologien zur Vergasung von flüssigen und gasförmigen Brennstoffen wurden bereits Ende der 1940er Jahre von Texaco und Anfang der 1950er Jahre von Shell entwickelt. In späteren Jahren hat Lurgi mit der Vermarktung einer dritten Technologie begonnen, die als Mehrzweckvergasung (MPG) bekannt ist und die ursprünglich aus dem Kohlevergasungsprozess entwickelt wurde, um die dort produzierten Teere zu entsorgen.

Bestimmte Schlüsselmerkmale aller drei Prozesse sind ähnlich. Alle arbeiten mit Flugstromreaktoren und die Betriebstemperaturen sind ähnlich, nämlich im Bereich von 1250 bis 1450 ° C. Beim Betrieb auf flüssiger Beschickung erzeugen alle drei Prozesse eine geringe Menge an Restkohlenstoff, was notwendig ist, um die Asche aus dem Reaktor abzuscheiden. Die wesentlichen Unterschiede zwischen den Prozessen liegen in den Details des Brennerdesigns, bei der Methode der Syngas-Kühlung und bei der Rußhandhabung.

Im Texaco-Prozess wird das Öl-Einsatzmaterial mit Dampf als Moderator vermischt und in einem Heizer vorgewärmt. Der Texaco-Brenner ist wassergekühlt, in dem Dampf und Öl über einen Ringschlitz, der das zentrale Sauerstoffrohr umgibt, zusammengeführt werden.

Der Prozessdampf wird verwendet, um das Öl-Einsatzmaterial zu zerstäuben, und eine gute Vermischung wird dadurch gewährleistet, dass den beiden Strömen eine gegenläufige Wirbelbewegung verliehen wird. Der Reaktor selbst ist ein leeres, feuerfestes Gefäß. Die Rußproduktion beträgt ca. 1 bis 2 Gew.-% bezogen auf den Brennstoffeinsatz.

In einer Variante des Texaco-Prozesses wird das erzeugte Roh-Synthesegas durch direktes Abschrecken ("Quenchen") mit Wasser gekühlt. In diesem Quench-Modus verlässt das heiße, rohe Syngas den Boden des Reaktors über ein Tauchrohr in den Quenchabschnitt. Das gequenchte Syngas ist mit Wasser gesättigt und verlässt den Quenchabschnitt mit einer Temperatur von etwa 250 °C.

Die höhe Wasserbeladung macht das gequenchte Gas zur CO-Konvertierung ohne weitere Dampfzugabe geeignet. Der Quench entfernt den Hauptanteil der Feststoffe, wie beispielsweise Ruß im Gas, und diese werden aus dem Quenchgefäß als Rußwasseraufschlämmung oder "Schwarzwasser" extrahiert.

Bei dem Texaco-Verfahren wird Ruß aus der Kohlenstoff-Wasser-Mischung mit Naphtha extrahiert und mit dem Ausgangsmaterial in den Reaktor zurückgeführt, wo es vollständig vergast wird. Das Schwarzwasser aus dem Quench und dem Wäscher wird abgekühlt und mit dem Naphtha in einem Dekanter in Kontakt gebracht. Hier nimmt das Naphtha den Ruß aus dem Wasser auf und hinterlässt dort den Hauptteil der in der Wasserphase vorhandenen Asche ("Grauwasser").

Das Ruß-Naphtha-Gemisch wird an der Oberseite des Dekanters abgezogen und mit frischem Öl-Einsatzmaterial gemischt. Das Naphtha wird in einer Destillationskolonne zurückgewonnen und in den Dekanter zurückgeführt, wobei die Ruß-Ölmischung als Sumpfprodukt zurückbleibt und zum Vergaser zurückgeführt wird.

Andere Vergasungsverfahren betreiben eine weniger aufwendige Behandlung des gewonnenen Ruß-Filterkuchens; es erfolgt aber zumindest eine Trocknung, bevor er verbrannt oder auf eine Deponie verbracht wird.

Die US-Patentschrift US 5670061 lehrt ebenfalls die Abtrennung von Vergasungsruß unter Erhalt einer wässrigen Aufschlämmung, die anschließend getrocknet und nachfolgend verbrannt wird.

Die Aufarbeitung des Ruß vor seiner Weiterverwendung oder Entsorgung nach den erörterten Verfahren ist demnach aufwendig und energieintensiv, weil sie die Trocknung oder Extraktion des abgeschiedenen Ruß umfasst. Das Verbringen des Ruß auf eine Deponie erzeugt weitere Kosten.

### Beschreibung der Erfindung

Die Aufgabe der vorliegenden Erfindung besteht daher darin, ein Verfahren zur Vergasung kohlenstoffhaltiger Brennstoffe vorzuschlagen, bei dem als Nebenprodukt Ruß anfällt und das das die erwähnten Nachteile der aus dem Stand der Technik bekannten Verfahren nicht aufweist.

Diese Aufgabe wird durch ein Verfahren mit den Merkmalen des Anspruchs 1 gelöst. Weitere Ausgestaltungen des erfindungsgemäßen Verfahrens ergeben sich aus den jeweiligen Unteransprüchen. Die Erfindung betrifft auch eine Anlage zur Durchführung des erfindungsgemäßen Verfahrens mit vorteilhaften Ausgestaltungen gemäß der abhängigen Verfahrensansprüche.

### Erfindungsgemäßes Verfahren:

Verfahren zur Herstellung eines Wasserstoff und Kohlenoxide umfassenden Synthesegases durch partielle Oxidation von kohlenstoffhaltigem Brennstoff in Gegenwart eines sauerstoffhaltigen Oxidationsmittels und eines Moderators, enthaltend Wasserdampf und/oder Kohlendioxid, umfassend folgende Schritte:
(a) Zuführen des kohlenstoffhaltigem Brennstoffs, des sauerstoffhaltigen Oxidationsmittels und des Moderators zu einer Vergasungsvorrichtung,
(b) Vermischen des kohlenstoffhaltigem Brennstoffs, des sauerstoffhaltigen Oxidationsmittels und des Moderators in der Vergasungsvorrichtung und Umsetzen des Gemischs unter Vergasungsbedingungen zu einem Rußpartikel enthaltenden Rohsynthesegas,
(c) Ausleiten des Rußpartikel enthaltenden Rohsynthesegases aus der Vergasungsvorrichtung, Abkühlen des Rohsynthesegases in einer Kühlvorrichtung und Zuführen des Rohsynthesegases zu einer Filtrationsvorrichtung, wobei die Kühlleistung der Kühlvorrichtung so eingestellt wird, dass der Taupunkt des Rohsynthesegases stromaufwärts von und in der Filtrationsvorrichtung nicht unterschritten wird,
(d) Abtrennen der Rußpartikel von dem Rohsynthesegases und Ausleiten eines mindestens teilweise von Rußpartikeln befreiten Rohsynthesegases aus der Filtrationsvorrichtung,
(e) optional Zuführen des Rohsynthesegases zu weiteren Konditionierungs- oder Verarbeitungsschritten,
(f) Ausleiten der Rußpartikel aus der Filtrationsvorrichtung und Zuführen der Rußpartikel zu einer Verbrennungsvorrichtung,
(g) Umsetzen der Rußpartikel in der Verbrennungsvorrichtung unter Verbrennungsbedingungen mittels eines der Verbrennungsvorrichtung zugeführten, gasförmigen, Sauerstoff enthaltenden Oxidationsmittels.

### Erfindungsgemäße Anlage:

Anlage zur Herstellung eines Wasserstoff und Kohlenoxide umfassenden Synthesegases durch partielle Oxidation von kohlenstoffhaltigem Brennstoff in Gegenwart eines sauerstoffhaltigen Oxidationsmittels und eines Moderators, enthaltend Wasserdampf und/oder Kohlendioxid, umfassend folgende Baugruppen und Anlagenbestandteile:
(a) Mittel zum Zuführen des kohlenstoffhaltigen Brennstoffs, des sauerstoffhaltigen Oxidationsmittels und des Moderators zu einer Vergasungsvorrichtung,
(b) Mittel zum Vermischen des kohlenstoffhaltigen Brennstoffs, des sauerstoffhaltigen Oxidationsmittels und des Moderators in der Vergasungsvorrichtung und eine Reaktionskammer in der Vergasungsvorrichtung zum Umsetzen des Gemischs unter Vergasungsbedingungen zu einem Rußpartikel enthaltenden Rohsynthesegas,
(c) Mittel zum Ausleiten des Rußpartikel enthaltenden Rohsynthesegases aus der Vergasungsvorrichtung, eine hinsichtlich ihrer Kühlleistung einstellbare Kühlvorrichtung und Mittel zum Zuführen zu einer Filtrationsvorrichtung, wobei die Kühlvorrichtung hinsichtlich ihrer Kühlleistung so einstellbar ist, dass der Taupunkt des Rohsynthesegases stromaufwärts von und in der Filtrationsvorrichtung nicht unterschritten wird,
(d) eine Filtrationsvorrichtung, geeignet zum Abtrennen der Rußpartikel von dem Rohsynthesegas, Mittel zum Ausleiten eines mindestens teilweise von Rußpartikeln befreiten Rohsynthesegases aus der Filtrationsvorrichtung,
(e) optional Mittel zum Zuführen des Rohsynthesegases zu weiteren Konditionierungs-oder Verarbeitungsschritten,
(f) Mittel zum Ausleiten der Rußpartikel aus der Filtrationsvorrichtung und Mittel zum Zuführen der Rußpartikel zu einer Verbrennungsvorrichtung,
(g) eine Verbrennungsvorrichtung, geeignet zum Umsetzen der Rußpartikel unter Verbrennungsbedingungen, Mittel zum Zuführen eines gasförmigen, Sauerstoff enthaltenden Oxidationsmittels.

Unter den Bedingungen der partiellen Oxidation bzw. den Vergasungsbedingungen sind die dem Fachmann an sich bekannten Reaktions- und Verfahrensbedingungen, insbesondere von Temperatur, Druck und Verweilzeit, zu verstehen, wie sie oben beispielhaft genannt und detailliert im einschlägigen Schrifttum erörtert werden und bei denen mindestens ein Teilumsatz, bevorzugt allerdings technisch relevante Umsätze der Edukte in Synthesegasprodukte wie CO und Wasserstoff erfolgt.

In analoger Weise sind unter den Verbrennungsbedingungen diejenigen dem Fachmann im Grundsatz bekannten Reaktions- und Verfahrensbedingungen, insbesondere von Temperatur, Druck und Verweilzeit, zu verstehen, die zur Erzielung einer möglichst vollständigen Verbrennung anzuwenden sind.

Der Erfindung liegt die Erkenntnis zugrunde, dass es vorteilhaft ist, das Abkühlen des bei der Vergasung erhaltenen, mit Rußpartikeln beladenen Rohsynthesegases so durchzuführen, dass es zunächst nur auf eine Temperatur oberhalb des Taupunkten abgekühlt wird, so dass die Rußpartikel in trockener Form durch Filtration aus dem Rohsynthesegas abgeschieden werden können. Erst nachfolgend erfolgt weiteres Abkühlen auf die für die nachfolgenden Konditionierungs- bzw. Verarbeitungsschritte benötigte Temperatur. Hierdurch wird vermieden, dass wie bei den aus dem Stand der Technik bekannten Verfahren Rußpartikel, wässriges Kondensat sowie gegebenenfalls Quenchwasser gemeinsam, z. B. als Filterkuchen, gewonnen werden. Die Weiterverarbeitung des Filterkuchens bzw. des darin enthaltenen Rußes, die häufig einen Trocknungsschritt beinhaltet, ist sehr energieaufwendig.

### Bevorzugte Ausgestaltungen der Erfindung

In einer bevorzugten Ausgestaltung des erfindungsgemäßen Verfahrens umfasst der kohlenstoffhaltigem Brennstoff flüssige Kohlenwasserstoffe. Diese können vorteilhaft, beispielsweise unter Zuhilfenahme des Moderators, versprüht oder vernebelt und sodann mit dem sauerstoffhaltigen Oxidationsmittel zu Rohsynthesegas umgesetzt werden.

In besonders bevorzugter Ausgestaltung des erfindungsgemäßen Verfahrens umfasst der kohlenstoffhaltigem Brennstoff Schweröl oder flüssige Raffinerierückstände als flüssige Kohlenwasserstoffe. Auf diese Weise könne diese wenig werthaltigen Fraktionen bzw. Reststoffe durch die Umsetzung zu Synthesegas stofflich genutzt werde.

Bevorzugt liegt bei dem erfindungsgemäßen Verfahren in Schritt (c) die Austrittstemperatur aus der Kühlvorrichtung zwischen 250 und 300 °C. Es hat sich gezeigt, dass bei dieser Temperatur und den üblichen Arbeitsdrücken der Taupunkt des Rohsynthesegases nicht unterschritten wird, so dass eine Kondensation stromaufwärts von oder in der Filtrationsvorrichtung sicher verhindert wird. Eine Kondensation in der Filtrationsvorrichtung würde zu Verstopfungen bzw. einem erheblichen Druckverlust führen, so dass die störungsfreie Funktion der Filtrationsvorrichtung nicht mehr gewährleistet wäre. Andererseits ist dieser Temperaturbereich für technische Filterelemente, insbesondere solche auf Basis keramischer oder metallischer Werkstoffe, akzeptabel.

Weiterhin bevorzugt ist es, wenn in der Filtrationsvorrichtung Filterelemente, bevorzugt Filterkerzen verwendet werden, die aus keramischen oder metallischen Werkstoffen gefertigt werden. Solche Filterelemente sind technisch bewährt und werden vom Handel bereitgehalten.

In besonders bevorzugter Ausgestaltung des erfindungsgemäßen Verfahrens ist die Filtrationsvorrichtung mindestens zweisträngig und ferner so ausgestaltet ist, dass in mindestens einem Teilstrang die Rußabscheidung und in mindestens einem weiteren Teilstrang zeitgleich das Ausleiten der Rußpartikel aus der Filtrationsvorrichtung durch Rückspülen erfolgen kann. Auf diese Weise kann ein störungsfreier, kontinuierlicher Betrieb des Verfahrens sichergestellt werden.

Bevorzugt erfolgt das Ausleiten der Rußpartikel periodisch durch Rückspülen der Filterelemente in der Filtrationsvorrichtung mit einem Spülmittel, Wenn der Druckverlust über ein bestimmtes Filterelement infolge Rußablagerung eine festgelegte Obergrenze überschreitet, wird dieses durch Rückspülen abgereinigt. Die Rußabscheidung erfolgt während der Abreinigung durch die anderen, parallel geschalteten Filterelemente. Besonders bevorzugt ist es dabei, wenn als Spülmittel von Rußpartikeln befreites Rohsynthesegas eingesetzt wird. Auf diese Weise wird das Einführen verfahrensfremder Gase vermieden.

Besonders bevorzugt wird das Rückspülen durch schlagartiges Entspannen stromaufwärts der Filtrationsvorrichtung durchgeführt. Durch den Druckimpuls kommt es zu einer besonders wirkungsvollen Entfernung des an dem Filterelement anhaftenden Rußes. Erreich werden kann dies beispielsweise durch ein Ventil im Zuleitungsweg stromaufwärts des abzureinigenden Filterelementes, durch das das in dem entsprechenden Leitungsvolumen befindliche Rohsynthesegas auf Umgebungsdruck entspannt wird. Das über das geöffnete Ventil ausgeleitete Gasvolumen muss dabei einer Entsorgungsvorrichtung, beispielsweise einem Fackelsystem, zugeführt werden.

In einer bevorzugten Ausgestaltung des erfindungsgemäßen Verfahrens ist vorgesehen, dass der Transport der Rußpartikel zur Verbrennung pneumatisch erfolgt und dass bevorzugt als Transportmittel von Rußpartikeln befreites Rohsynthesegas eingesetzt wird. Diese Transportmöglichkeit wird eröffnet, da die bei dem erfindungsgemäßen Verfahren erhaltenen Rußpartikel trocken und somit fluidisierbar sind. Durch die Verwendung von Rohsynthesegas als Transportmittel wird wiederum das Einführen verfahrensfremder Gase vermieden.

In einem weiteren Aspekt des erfindungsgemäßen Verfahrens werden die Rußpartikel vor dem Zuführen zu der Verbrennungsvorrichtung zunächst in einem Zwischenbehälter gesammelt. Auf diese Weise können zeitliche Schwankungen bei der Zuführung der Rußpartikel zu der Verbrennungsvorrichtung ausgeglichen werden. Ferner kann beim Wiederanfahren der Anlage nach Stillständen die Verbrennungsvorrichtung durch Nutzung des in dem Zwischenbehälter befindlichen Rußvorrats rascher in Betrieb genommen werden.

Bevorzugt wird der Abgasweg der Rauchgase stromabwärts der Verbrennungsvorrichtung durch gekühlte Metallwände ausgestaltet. Die bei der Vergasung eingesetzten Schweröle und ölartigen Rückstände enthalten oft Metalle wie beispielsweise Vanadium. Diese werden in der Verbrennungsvorrichtung zu den entsprechenden Oxiden umgesetzt, die sich korrosiv gegenüber Feuerfestmaterialien auf keramischer bzw. oxidischer Basis verhalten.

Bevorzugt schließen sich der Synthese des Rohsynthesegases nach dem erfindungsgemäßen Verfahren weitere Konditionierungs- oder Verarbeitungsschritte, beispielsweise Quenchen, weiteres Abkühlen, Konvertierung, Gaswäsche oder die chemische Umsetzung des Synthesegases zu Syntheseprodukten an. Da beim Quenchen des Rohsynthesegases mit Wasser sein Wassergehalt entsprechend erhöht wird, bietet es gute Voraussetzungen für die Durchführung einer sich anschließenden Konvertierung des enthaltenen Kohlenmonoxids zu Kohlendioxid und Wasserstoff.

In besonderer Ausgestaltung der erfindungsgemäßen Anlage umfasst diese ferner einen Zwischenbehälter zur Zwischenlagerung der aus dem Rohsynthesegas abgetrennten Rußpartikel vor dem Zuführen zu der Verbrennungsvorrichtung. Auf diese Weise können zeitliche Schwankungen bei der Zuführung der Rußpartikel zu der Verbrennungsvorrichtung ausgeglichen werden. Ferner kann beim Wiederanfahren der Anlage nach Stillständen die Verbrennungsvorrichtung durch Nutzung des in dem Zwischenbehälter befindlichen Rußvorrats rascher in Betrieb genommen werden.

### Ausführungsbeispiel

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger,Kombination die Erfindung, unabhängig von ihrer Zusammenfassung in den Ansprüchen oder deren Rückbeziehung.

Es zeigt die einzige Figur:

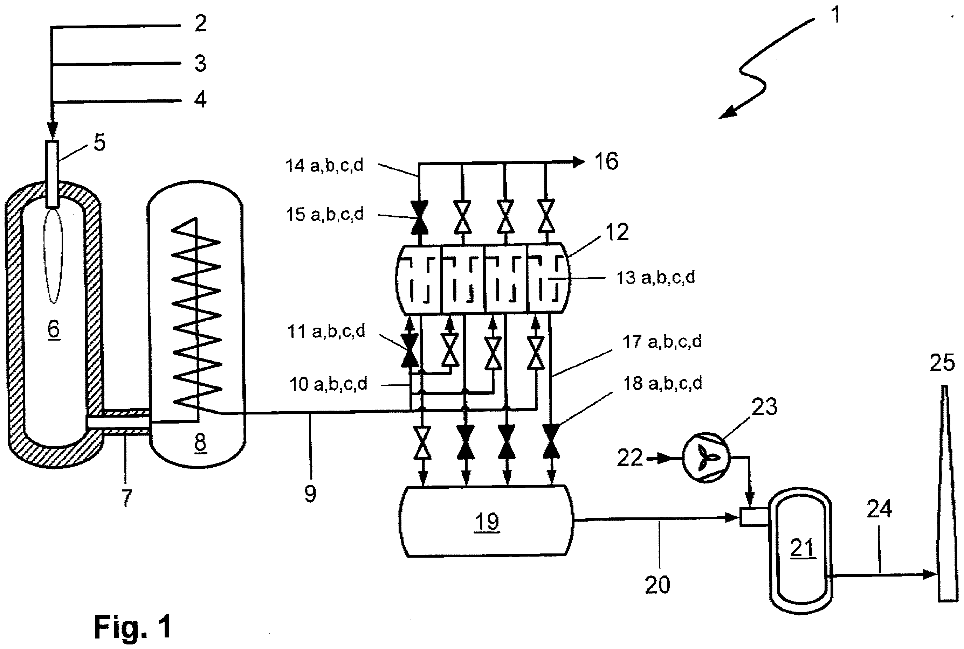

- Fig. 1: eine bevorzugte Ausgestaltung des erfindungsgemäßen Verfahrens bzw. der erfindungsgemäßen Anlage.

In der in Fig. 1 schematisch dargestellten Anlage 1 zur Synthesegaserzeugung durch Ölvergasung, beispielsweise flüssiger Raffinerierückstände auf Kohlenwasserstoffbasis, werden über die Leitungen 2, 3, 4 dem Brenner 5 der Vergasungsvorrichtung die Medien Öl, Wasserdampf als Moderator und Sauerstoff als Oxidationsmittel zugeführt. Die detaillierte Medienführung ist in der Figur bildlich nicht dargestellt; so kann stromaufwärts des Brenners oder im Brenner selber eine Vorvermischung eines der Medien, beispielsweise des Öls, mit dem Moderator erfolgen.

Die Umsetzung des Öls mit dem Oxidationsmittel zu einem Rohsynthesegas erfolgt innerhalb der Reaktionskammer 6 der Vergasungsvorrichtung. Etwaige in der Reaktionskammer vorhandene oder an diese angefügte Vorrichtungen zum Austrag fester Nebenprodukte der Vergasung wie Asche, Schlacke oder Anteile gebildeten Rußes sind in der schematischen Darstelllung der Fig. 1 nicht gezeigt.

Das mit Rußpartikeln beladene Rohsynthesegas tritt über Leitung 7 in die Kühlvorrichtung, den Abhitzekessel 8 ein. Hier erfolgt die Absenkung der Temperatur des Rohsynthesegases auf eine Temperatur zwischen 250 und 300 °C. Die dem Rohsynthesegas dabei entzogene Wärme wird zur Dampferzeugung verwendet.

Das abgekühlte, mit Rußpartikeln beladene Rohsynthesegas tritt nachfolgend über Leitung 9 in die Filtrationsvorrichtung 12 ein. Diese ist im gezeigten Ausführungsbeispiel mit vier parallelen Strängen ausgestaltet, von denen sich drei im Filtrationsmodus (leere Ventilsymbole im Gasweg) und eines im Rückspül- bzw. Abreinigungsmodus befindet (schwarz ausgefüllte Ventilsymbole im Gasweg).

Über die Leitungen 10 b, c, d und die im Leitungsweg befindlichen Ventile 11 b, c, d wird den Filterelementen 13 b, c, d das mit Rußpartikeln beladene Rohsynthesegas zugeführt. Die Rußpartikel scheiden sich auf den hier als Filterkerzen auf metallischer oder keramischer Basis ausgeführten Filterelementen ab. Das von Rußpartikeln befreite Rohsynthesegas wird über Leitungen 14 b, c, d und die im Leitungsweg befindlichen Ventile 15 b, c, d in die Sammelleitung 16 geführt und über diese weiteren, hier nicht gezeigten Konditionierungs- oder Verarbeitungsschritten zugeleitet.

Da sich die Filterstränge b, c, d im Filtrationsmodus befinden, sind die für den Rußtransport dienenden Leitungswege 17 b, c, d und die in diesen Leitungswegen befindlichen Ventile 18 b, c, d verschlossen.

Im Filterstrang a ist der Leitungsweg 10 a durch Ventil 11 a verschlossen, da sich das Filterelement 13 a im Abreinigungsmodus befindet. Dazu wird über eine nicht gezeigte Rückspülleitung von Rußpartikeln befreites Rohsynthesegas auf die Filtratseite des Filterelements 13 a geleitet und dieses dadurch rückgespült und somit abgereinigt. Vorzugsweise wird die Abreinigung dadurch eingeleitet, dass durch schlagartiges Öffnen des im Leitungsweg 17 a befindlichen Ventils 18 a ein Druckstoß erzeugt wird, nachdem das Rückspülgas auf die Filtratseite des Filterelements 13 a geleitet wurde, so dass die auf dem Filter abgelagerten Rußpartikel über Leitung 17 a und Ventil 18 a in den Zwischenbehälter 19 gelangen. Vorzugsweise ist der Zwischenbehälter 19 unter der Filtrationsvorrichtung 12 angeordnet, so dass der Transport der Rußpartikel mittels Rückspülgas und zusätzlich schwerkraftvermittelt erfolgt.

Aus dem Zwischenbehälter 19 gelangen die Rußpartikel über Leitung 20 in die Verbrennungsvorrichtung 21. Der Transport der Rußpartikel kann beispielsweise mittels pneumatischem Transport unter Zuhilfenahme eines Transportgases erfolgen, hierzu kann beispielsweise von Rußpartikeln befreites Rohsynthesegas verwendet werden. Es können aber auch andere Transportgase erfolgen, die die Verbrennung in der Verbrennungsvorrichtung nicht stören. Der Verbrennungsvorrichtung 21 wird ferner über Leitung 22 und ein im Leitungsweg 22 angeordnetes Gebläse 23 Verbrennungsluft zugeführt.

In der Verbrennungsvorrichtung 21 erfolgt die weitgehend vollständige Verbrennung der Rußpartikel unter Bildung eines Verbrennungsabgases, das über Leitung 24 dem Kamin 25 zugeleitet und über letzteren an die Umgebung abgegeben wird. Das Abführen etwaiger fester Verbrennungsrückstände, beispielsweise Ascheanteile, aus der Verbrennungsvorrichtung ist an sich bekannt und wird daher bildlich nicht dargestellt.

Bevorzugt wird der Abgasweg der Rauchgase stromabwärts der Verbrennungsvorrichtung, also insbesondere Leitung 24, durch gekühlte Metallwände ausgestaltet. Die bei der Vergasung eingesetzten Schweröle und ölartigen Rückstände enthalten oft Metalle wie beispielsweise Vanadium. Diese werden in der Verbrennungsvorrichtung zu den entsprechenden Oxiden umgesetzt, die sich korrosiv gegenüber Feuerfestmaterialien auf keramischer bzw. oxidischer Basis verhalten.

### Gewerbliche Anwendbarkeit

Mit der Erfindung wird ein vorteilhaftes Verfahren zur Vergasung kohlenstoffhaltiger Brennstoffe vorgeschlagen, bei dem als Nebenprodukt Ruß anfällt und bei dem eine energieintensive Aufarbeitung des Ruß vor seiner Weiterverwendung oder Entsorgung , beipielsweise aufgrund erforderlicher Trocknungspozesse, oder Deponierungskosten vermieden werden.

### Bezugszeichenliste

- [1]: Anlage
- [2]: Leitung
- [3]: Leitung
- [4]: Leitung
- [5]: Brenner (Vergasungsvorrichtung)
- [6]: Reaktionskammer (Vergasungsvorrichtung)
- [7]: Leitung
- [8]: Kühlvorrichtung (Abhitzekessel)
- [9]: Leitung
- [10 a,b,c,d]: Leitung (Zuleitung zur Filtrationsvorrichtung)
- [11 a,b,c,d]: Ventil
- [12]: Filtrationsvorrichtung
- [13 a,b,c,d]: Leitung
- [14 a,b,c,d]: Leitung
- [15 a,b,c,d]: Leitung
- [16]: Leitung
- [17 a,b,c,d]: Leitung
- [18 a,b,c,d]: Ventil
- [19]: Zwischenbehälter
- [20]: Leitung
- [21]: Verbrennungsvorrichtung
- [22]: Leitung
- [23]: Gebläse
- [24]: Leitung
- [25]: Kamin

## Patentansprüche

1. Verfahren zur Herstellung eines Wasserstoff und Kohlenoxide umfassenden Synthesegases durch partielle Oxidation von kohlenstoffhaltigem Brennstoff in Gegenwart eines sauerstoffhaltigen Oxidationsmittels und eines Moderators, enthaltend Wasserdampf und/oder Kohlendioxid, umfassend folgende Schritte:
(a) Zuführen des kohlenstoffhaltigem Brennstoffs, des sauerstoffhaltigen Oxidationsmittels und des Moderators zu einer Vergasungsvorrichtung,
(b) Vermischen des kohlenstoffhaltigem Brennstoffs, des sauerstoffhaltigen Oxidationsmittels und des Moderators in der Vergasungsvorrichtung und Umsetzen des Gemischs unter Vergasungsbedingungen zu einem Rußpartikel enthaltenden Rohsynthesegas,
(c) Ausleiten des Rußpartikel enthaltenden Rohsynthesegases aus der Vergasungsvorrichtung, Abkühlen des Rohsynthesegases in einer Kühlvorrichtung und Zuführen des Rohsynthesegases zu einer Filtrationsvorrichtung, wobei die Kühlleistung der Kühlvorrichtung so eingestellt wird, dass der Taupunkt des Rohsynthesegases stromaufwärts von und in der Filtrationsvorrichtung nicht unterschritten wird,
(d) Abtrennen der Rußpartikel von dem Rohsynthesegases und Ausleiten eines mindestens teilweise von Rußpartikeln befreiten Rohsynthesegases aus der Filtrationsvorrichtung,
(e) optional Zuführen des Rohsynthesegases zu weiteren Konditionierungs- oder Verarbeitungsschritten,
(f) Ausleiten der Rußpartikel aus der Filtrationsvorrichtung und Zuführen der Rußpartikel zu einer Verbrennungsvorrichtung,
(g) Umsetzen der Rußpartikel in der Verbrennungsvorrichtung unter Verbrennungsbedingungen mittels eines der Verbrennungsvorrichtung zugeführten, gasförmigen, Sauerstoff enthaltenden Oxidationsmittels.

2. Verfahren nach Anspruch 1, **dadurch gekennzeichnet, dass** der kohlenstoffhaltigem Brennstoff flüssige Kohlenwasserstoffe umfasst.

3. Verfahren nach Anspruch 2, **dadurch gekennzeichnet, dass** der kohlenstoffhaltigem Brennstoff Schweröl oder flüssige Raffinerierückstände als flüssige Kohlenwasserstoffe umfasst.

4. Verfahren nach einem der vorigen Ansprüche, **dadurch gekennzeichnet, dass** in Schritt (c) die Austrittstemperatur aus der Kühlvorrichtung zwischen 250 und 300 °C liegt.

5. Verfahren nach einem der vorigen Ansprüche, **dadurch gekennzeichnet, dass** in der Filtrationsvorrichtung Filterelemente, bevorzugt Filterkerzen verwendet werden, die aus keramischen oder metallischen Werkstoffen gefertigt werden.

6. Verfahren nach einem der vorigen Ansprüche, **dadurch gekennzeichnet, dass** die Filtrationsvorrichtung mindestens zweisträngig und ferner so ausgestaltet ist, dass in mindestens einem Teilstrang die Rußabscheidung und in mindestens einem weiteren Teilstrang zeitgleich das Rückspülen erfolgen kann.

7. Verfahren nach Anspruch 6, **dadurch gekennzeichnet, dass** das Ausleiten der Rußpartikel periodisch durch Rückspülen der Filterelemente in der Filtrationsvorrichtung mit einem Spülmittel erfolgt.

8. Verfahren nach Anspruch 6 oder 7, **dadurch gekennzeichnet, dass** als Spülmittel von Rußpartikeln befreites Rohsynthesegas eingesetzt wird.

9. Verfahren nach Anspruch 6 bis 8, **dadurch gekennzeichnet, dass** das Rückspülen durch schlagartiges Entspannen stromaufwärts der Filtrationsvorrichtung durchgeführt wird.

10. Verfahren nach einem der vorigen Ansprüche, **dadurch gekennzeichnet, dass** der Transport der Rußpartikel zur Verbrennung pneumatisch erfolgt und dass bevorzugt als Transportmittel von Rußpartikeln befreites Rohsynthesegas eingesetzt wird.

11. Verfahren nach einem der vorigen Ansprüche, **dadurch gekennzeichnet, dass** die Rußpartikel vor dem Zuführen zu der Verbrennungsvorrichtung zunächst in einem Zwischenbehälter gesammelt werden.

12. Verfahren nach einem der vorigen Ansprüche, **dadurch gekennzeichnet, dass** der Abgasweg der Rauchgase stromabwärts der Verbrennungsvorrichtung durch gekühlte Metallwände ausgestaltet ist.

13. Verfahren nach einem der vorigen Ansprüche, **dadurch gekennzeichnet, dass** als weitere Konditionierungs- oder Verarbeitungsschritte mindestens ein Schritt, ausgewählt aus der nachfolgenden Gruppe vorhanden ist: Quenchen, weiteres Abkühlen, Konvertierung, Gaswäsche.

14. Anlage zur Herstellung eines Wasserstoff und Kohlenoxide umfassenden Synthesegases durch partielle Oxidation von kohlenstoffhaltigem Brennstoff in Gegenwart eines sauerstoffhaltigen Oxidationsmittels und eines Moderators, enthaltend Wasserdampf und/oder Kohlendioxid, umfassend folgende Baugruppen und Anlagenbestandteile:
(a) Mittel zum Zuführen des kohlenstoffhaltigen Brennstoffs, des sauerstoffhaltigen Oxidationsmittels und des Moderators zu einer Vergasungsvorrichtung,
(b) Mittel zum Vermischen des kohlenstoffhaltigen Brennstoffs, des sauerstoffhaltigen Oxidationsmittels und des Moderators in der Vergasungsvorrichtung und eine Reaktionskammer in der Vergasungsvorrichtung zum Umsetzen des Gemischs unter Vergasungsbedingungen zu einem Rußpartikel enthaltenden Rohsynthesegas,
(c) Mittel zum Ausleiten des Rußpartikel enthaltenden Rohsynthesegases aus der Vergasungsvorrichtung, eine hinsichtlich ihrer Kühlleistung einstellbare Kühlvorrichtung und Mittel zum Zuführen zu einer Filtrationsvorrichtung, wobei die Kühlvorrichtung hinsichtlich ihrer Kühlleistung so einstellbar ist, dass der Taupunkt des Rohsynthesegases stromaufwärts von und in der Filtrationsvorrichtung nicht unterschritten wird,
(d) eine Filtrationsvorrichtung, geeignet zum Abtrennen der Rußpartikel von dem Rohsynthesegas, Mittel zum Ausleiten eines mindestens teilweise von Rußpartikeln befreiten Rohsynthesegases aus der Filtrationsvorrichtung,
(e) optional Mittel zum Zuführen des Rohsynthesegases zu weiteren Konditionierungs-oder Verarbeitungsschritten,
(f) Mittel zum Ausleiten der Rußpartikel aus der Filtrationsvorrichtung und Mittel zum Zuführen der Rußpartikel zu einer Verbrennungsvorrichtung,
(g) eine Verbrennungsvorrichtung, geeignet zum Umsetzen der Rußpartikel unter Verbrennungsbedingungen, Mittel zum Zuführen eines gasförmigen, Sauerstoff enthaltenden Oxidationsmittels.

15. Anlage nach Anspruch 14, ferner umfassend einen Zwischenbehälter zur Zwischenlagerung der aus dem Rohsynthesegas abgetrennten Rußpartikel vor dem Zuführen zu der Verbrennungsvorrichtung.
